**Europäisches Patentamt**

**European Patent Office**

**Office européen des brevets**

(19)

(11) Numéro de publication : **0 220 095**

**B1**

(12) FASCICULE DE BREVET EUROPÉEN

(45) Date de publication du fascicule du brevet :
26.04.89

(21) Numéro de dépôt : 86402053.2

(22) Date de dépôt : 18.09.86

(51) Int. Cl.⁴ : **B 29 C 65/00**, B 23 K 37/04

ERRATUM

(SEITE, SPALTE, ZEILE)
(PAGE, COLUMN, LINE)
(PAGE, COLONNE, LIGNE)

| DIE TEXTSTELLE :<br>TEXT PUBLISHED :<br>LE PASSAGE SUIVANT : | | | | LAUTET BERICHTIGT :<br>SHOULD READ :<br>DEVRAIT ETRE LU : |
|---|---|---|---|---|
| le travail de préparation de l'extrémité des prévoit de préférence un dispositif de verrouillage du cadre support avec le berceau pour les lier en déplacement. | 3 | 3 | 4/7 | le travail de préparation de l'extrémité des pièces sur site avant assemblage, cette préparation pouvant comprendre des découpes, usinages, etc. On prévoit de préférence un dispositif de verrouillage du cadre  support avec le berceau pour les lier en déplacement. |
| Il est aussi manipuler et aboutit à une précision parfaite d'assemblage procurant une grande nécessité d'assemblage avec une meilleure cadence. | 5 | 8 | 34/37 | Il est aisé à manipuler et aboutit à une précision parfaite d'assemblage procurant une grande sécurité d'assemblage avec une meilleure cadence. |

Tag der Entscheidung<br>über die Berichtigung<br>Date of decision on<br>rectification:<br>Date de décision portant<br>sur modification:   )   16.3.90

Ausgabe- und Ver-<br>öffentlichungstag:<br>Issue and publication<br>date:<br>Date d'edition et de<br>publication:   )   9.5.90

Patbl.Nr)   90/19

EPB no:) . . . . . . . .

Bull. no:)

Europäisches Patentamt

European Patent Office

Office européen des brevets

(19)

(11) Numéro de publication : **0 220 095 B1**

(12) **FASCICULE DE BREVET EUROPÉEN**

(45) Date de publication du fascicule du brevet :
26.04.89

(21) Numéro de dépôt : **86402053.2**

(22) Date de dépôt : **18.09.86**

(51) Int. Cl.⁴ : **B 29 C 65/00, B 23 K 37/04**

(54) **Procédé et dispositif de redressement et d'alignement d'une première pièce en matière plastique par exemple thermosoudable avec une deuxième pièce en matière plastique similaire pouvant également être redressée en vue de leur assemblage bout à bout.**

(30) Priorité : **19.09.85 FR 8513908**

(43) Date de publication de la demande :
**29.04.87 Bulletin 87/18**

(45) Mention de la délivrance du brevet :
**26.04.89 Bulletin 89/17**

(84) Etats contractants désignés :
**AT BE CH DE GB IT LI LU NL SE**

(56) Documents cités :
**FR--A-- 2 226 260**
**GB--A-- 1 450 160**
**GB--A-- 2 048 413**
**US--A-- 3 772 753**
**US--A-- 3 806 021**
**US--A-- 3 831 256**
**US--A-- 4 174 996**
**US--A-- 4 352 708**

(73) Titulaire : **GAZ DE FRANCE**
**23, rue Philibert Delorme**
**F-75017 Paris (FR)**

**"SENS CONSTRUCTIONS" (SENSCO)**
**11, rue de Gravereau**
**F-89100 Sens (FR)**

**SOCIETE JOSEPH SAURON MATERIEL INDUSTRIEL**
**14, rue Nollet**
**F-91200 Athis Mons (FR)**

(72) Inventeur : **Cochetel, Michel André**
**24, rue Marc Sagnier**
**F-91600 Savigny sur Orge (FR)**
Inventeur : **Longeau, Jean Michel**
**Hameau de Beaujard**
**F-89500 Villeneuve sur Yonne (FR)**
Inventeur : **Sauron, Jean**
**44, Boulevard de Bellevue**
**F-91210 Draveil (FR)**
Inventeur : **Cazenave, Bernard**
**9-11, rue Ernest Renan**
**F-92130 Issy les Moulineaux (FR)**
Inventeur : **Le Testu, Patrick**
**Quartier Ourouspoure**
**F-64990 Saint Pierre d'Irube (FR)**

(74) Mandataire : **Beauchamps, Georges et al**
**Cabinet Z.Weinstein 20, avenue de Friedland**
**F-75008 Paris (FR)**

# Description

L'invention concerne essentiellement un dispositif de redressement avant assemblage et d'alignement d'une première pièce en matière plastique par exemple thermosoudable avec une deuxième pièce en matière plastique similaire pouvant également être redressée en vue de leur assemblage bout à bout.

On sait que, pour transporter des fluides divers, on utilise de plus en plus des tubes ou conduites en matière plastique qui sont mis bout à bout et assemblés d'une manière appropriée. L'assemblage peut se réaliser par emboîtement ou emmanchement des tubes, ou encore les tubes peuvent être soudés bout à bout par exemple à l'aide d'un manchon de thermosoudage.

Toutefois, un tel assemblage est le plus souvent long et pénible à réaliser. En effet, on sait que la plupart des matières plastiques, et notamment l'une des plus courantes, le polyéthylène, se déforment aisément. Cette déformation est en outre généralement obligatoirement réalisée par l'embobinage des tubes sur des tourets.

De ce fait, lorsqu'on déroule les tubes, ceux-ci présentent une déformation, et éventuellement une torsion, variables.

Dans la mesure où ces tubes sont découpés selon des longueurs importantes, il devient très difficile d'orienter correctement l'extrémité libre du tube pour l'amener en position alignée avec un autre tube en vue de souder lesdits tubes bout à bout. Or, un manque d'alignement des extrémités à raccorder, par exemple dû à une déformation de courbure inverse des tubes à raccorder, au voisinage de leurs extrémités, rendra très difficile la soudure bout à bout, voire aboutira à une soudure défectueuse qui devra être refaite. En outre, en général les assemblages bout à bout sont réalisés sur site avec l'utilisation d'un manchon qui peut être de thermosoudage. Si l'extrémité d'un tube n'est pas alignée avec l'extrémité de l'autre tube, il n'est pas possible de faire coulisser le manchon sur l'extrémité du tube présentant un mauvais alignement, ce qui augmente les difficultés d'assemblage.

On connaît déjà, d'après le document GB-A-2 048 413 un dispositif d'alignement de l'extrémité d'une première pièce allongée en matière plastique avec l'extrémité d'une deuxième pièce en matière plastique similaire en vue de l'assemblage bout à bout de ces deux pièces, ce dispositif comprenant un mors mobile maintenant l'extrémité de la première pièce tout en permettant l'alignement de cette extrémité avec l'extrémité de la seconde pièce.

Toutefois, ce dispositif ne permet pas d'obtenir un redressement fiable et précis des tubes en matière plastique déformés et donc um alignement satisfaisant avec un autre tube en vue de leur assemblage bout à bout, par exemple par simple soudage ou par manchonnage.

La présente invention a donc pour but de remédier notamment aux inconvénients ci-dessus en proposant un dispositif de redressement d'une pièce en matière plastique, par exemple thermosoudable, et d'alignement précis avec une autre pièce en matière plastique similaire, d'une conception particulièrement simple, d'une manipulation extrêmement aisée, sans faire appel à des moyens modifiant la structure ou nécessitant un usinage et permettant de réaliser un assemblage ou raccordement à l'aide d'un procédé quelconque d'assemblage ou de soudage. Egalement on obtient avec ce dispositif une homogénéité et une solidité d'assemblage répondant aux qualités ou normes requises.

A cet effet, l'invention a pour objet un dispositif de redressement et d'alignement de l'extrémité d'une première pièce allongée en matière plastique avec l'extrémité d'une deuxième pièce en vue de l'assemblage bout à bout de ces deux pièces et du type comprenant un mors mobile de maintien de l'extrémité de la première pièce ainsi qu'un dispositif de commande de ce mors mobile pour redresser et aligner l'extrémité de la première pièce avec l'extrémité correspondante de la deuxième pièce, caractérisé en ce que le dispositif de commande du mors mobile comprend un système à excentriques permettant le déplacement dudit mors et donc de l'extrémité de la pièce suivant une direction quelconque, tandis qu'un mors fixe maintient en position fixe la pièce à une certaine distance de ladite extrémité.

Selon un mode de réalisation préféré, le dispositif selon l'invention est encore caractérisé en ce qu'il comprend un châssis sur lequel est monté le dispositif Selon un mode de réalisation préféré, le dispositif selon l'invention est encore caractérisé en ce qu'il comprend un châssis sur lequel est monté le dispositif de commande précité actionnant un bras de commande proprement dit dans la direction quelconque précitée, ledit bras de commande étant solidaire d'un berceau monté déplaçable par rapport au châssis, sur lequel berceau vient prendre appui un cadre support solidaire du mors mobile.

Selon une autre caractéristique, le dispositif de commande précité comprend un système à deux excentriques, et le bras de commande comprend une articulation à rotule maintenue prisonnière dans un logement de l'un des excentriques. Un premier excentrique est monté en rotation libre dans un logement réalisé dans la masse du deuxième excentrique, les axes des excentriques étant parallèles et non coïncidants. Avantageusement, l'axe du bras de commande est également non coïncidant avec les centres ou axes des excentriques.

Selon une autre caractéristique, l'axe du bras de commande est inclus dans un plan de symétrie de la première pièce passant par le centre géométrique de ladite première pièce.

Selon une variante de réalisation avantageuse, le dispositif selon l'invention est encore caractérisé en ce qu'il comprend un système de dégagement du cadre support relativement au berceau de manière à déplacer le cadre support latéralement relativement au berceau hors de l'axe du dispositif, ce qui permet de faciliter le travail de préparation de l'extrémité des prévoit de préférence un dispositif de verrouillage du cadre support avec le berceau pour les lier en déplacement.

Selon une autre variante de réalisation avantageuse du dispositif selon l'invention, le châssis est lui-même monté déplaçable sur des rails, ainsi que le mors fixe précité. En particulier, le châssis et le mors fixe sont montés sur une pièce unique formant embase de manière à les lier en déplacement, cette pièce formant embase étant alors montée déplaçable sur les rails.

D'autre part, le mors mobile peut être surmonté d'un dispositif d'avancement d'un manchon d'assemblage de ladite première pièce par avancement du manchon en direction de l'extrémité à assembler de la première pièce maintenue dans le mors mobile. Un tel dispositif d'avancement peut être simplement réalisé par un système à tige filetée et à vis, une extrémité de la tige filetée étant pourvue d'une fourchette disposée de manière à permettre l'avancement du manchon en direction de l'extrémité de la première pièce maintenue dans le mors mobile.

On comprend ainsi qu'avec le dispositif selon l'invention, on élimine tous les inconvénients de la technique antérieure. En outre, on obtient un dispositif particulièrement simple, aisé à manipuler et permettant un assemblage très rapide des pièces à assembler. En outre, dans le cas de l'utilisation d'un manchon soit de thermosoudage, soit pour réaliser un manchonnage des extrémités des pièces à assembler, le dispositif selon l'invention permet d'avancer un manchon en position correcte d'assemblage des extrémités des pièces à assembler.

D'autre part, l'invention permet de redresser les extrémités des pièces assemblées, par exemple des tubes à souder, pour les amener en relation coaxiale quelle que soit la déformation d'origine de ces pièces. Ceci est rendu possible selon l'invention par le dispositif de l'invention qui réalise un mouvement de redressement dans l'espace de sorte que l'extrémité se déplace dans une direction quelconque dans un plan défini sensiblement par l'extrémité de la pièce, en particulier du tube, pour amener ladite extrémité à une position précise prédéterminée d'assemblage.

Cette position peut être contrôlée visuellement ou automatiquement.

D'autres buts, caractéristiques et avantages de l'invention apparaîtront clairement à la lumière de la description explicative qui va suivre faite en référence aux dessins annexés dans lesquels :

- la figure 1 représente une vue schématique en élévation, avec coupe partielle d'un dispositif complet selon l'invention de redressement et d'alignement d'une première pièce à assembler avec une deuxième pièce (non représentée) ; à la figure 1, on a représenté le cône de déplacement obtenu par les positions extrêmes de déplacement de l'extrémité de la pièce à assembler, en traits fantômes ;

- la figure 2 représente une vue agrandie montrant le dispositif d'avancement du manchon d'assemblage, l'extrémité de la deuxième pièce étant représentée ;
- la figure 3 représente une vue en coupe selon la ligne de trace III-III de la figure 2 ;
- la figure 4 représente une vue en coupe selon la ligne de trace IV-IV de la figure 2 ;
- la figure 5 représente une vue en coupe selon la ligne de trace V-V de la figure 6 ;
- la figure 6 représente une vue en coupe selon la ligne de trace VI-VI de la figure 5 ;
- la figure 7 représente une vue en coupe selon la ligne de trace VII-VII de la figure 6 ;
- la figure 8 représente une vue de dessus selon la flèche F de la figure 6 ;
- la figure 9 représente une vue en coupe selon la ligne de trace IX-IX de la figure 10 ; et
- la figure 10 représente une vue en coupe selon la ligne de trace X-X de la figure 9.

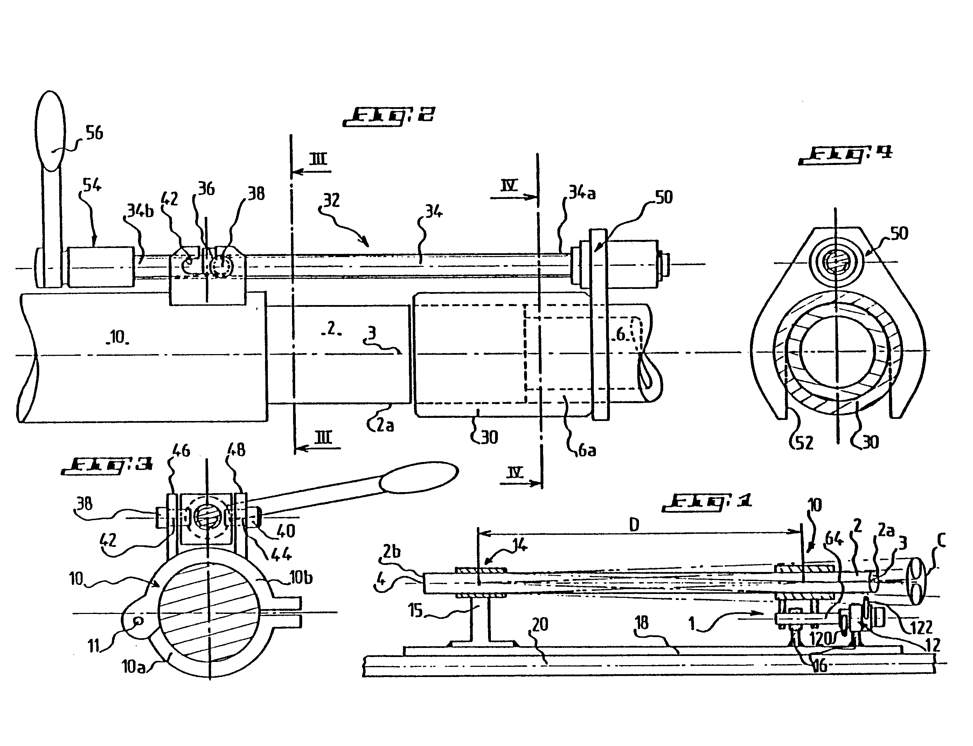

En référence à la figure 1, la présente invention concerne un dispositif représenté par le numéro de référence général 1 de redressement avant assemblage d'une première pièce 2 en matière plastique, par exemple thermosoudable, de forme allongée définissant deux extrémités libres 2a, 2b. L'extrémité à assembler 2a peut être dénommée extrémité avant et l'autre extrémité 2b extrémité arrière. Naturellement, pour le besoin de la figure, l'extrémité arrière 2b a été représentée juste à la sortie du dispositif mais on conçoit bien la pièce 2 à assembler, ici un tube creux, peut être d'une grande longueur de sorte que normalement l'extrémité 2b se trouve loin du dispositif de redressement et d'alignement selon l'invention. Chaque extrémité libre (2a, 2b) présente un centre géométrique 3, 4 respectivement. Cette première pièce est à l'état déformé après avoir été initialement d'une forme sensiblement régulière, par exemple tubulaire comme représenté.

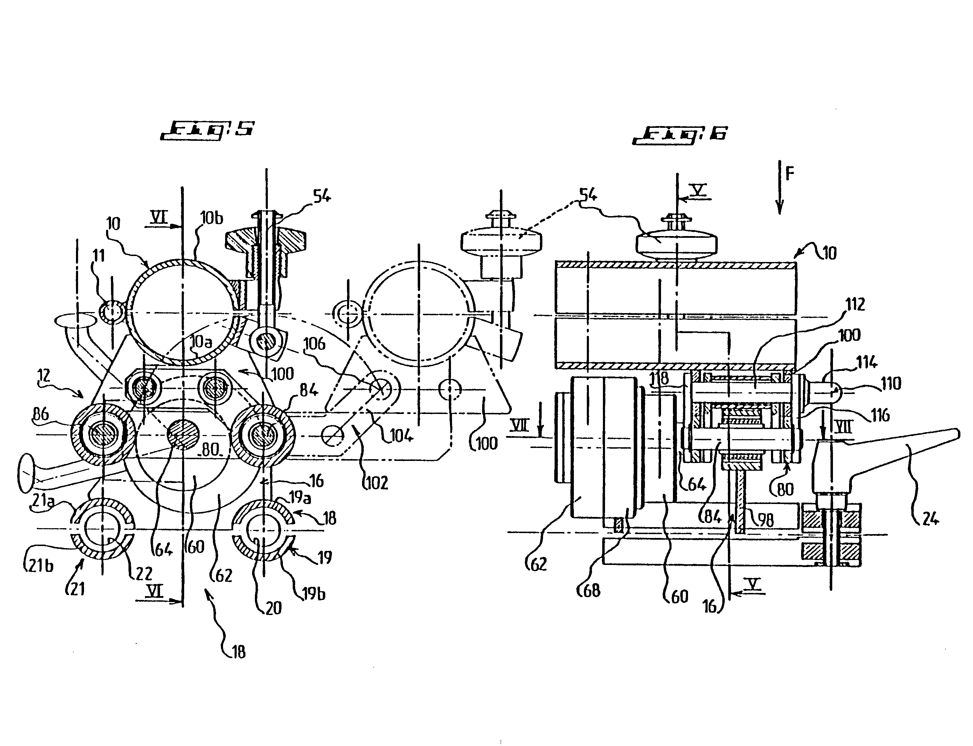

Le dispositif de redressement selon l'invention est également un dispositif d'alignement, comme précédemment mentionné, d'une extrémité 2a de ladite première pièce 2 avec l'extrémité correspondante 6a d'une deuxième pièce 6 (figure 2) en matière plastique similaire, pouvant également être redressée, en vue de l'assemblage desdites première pièce 2 et deuxième pièce 6 comme cela sera décrit plus loin.

Le dispositif de redressement et d'alignement selon l'invention est caractérisé en ce qu'il comprend :

- un moyen 10 de maintien de l'extrémité 2a de ladite première pièce 2 en position mobile, formant un mors mobile de maintien, disposé au voisinage de l'extrémité 2a à assembler de ladite première pièce 2, comme cela est clairement visible aux figures 1 et 2 notamment ; et
- un dispositif 12 de commande de déplacement dudit mors mobile 10, agencé pour déplacer ledit mors mobile 10, et par voie de conséquence le centre géométrique 3 de l'extrémité 2a maintenue par le mors mobile 10, dans une direction quelconque dans un plan défini sensiblement par l'extrémité proprement dite 2a, de la première pièce 2, pour redresser et aligner ladite extrémité 2a de la première pièce avec l'extrémité correspondante 6a de ladite seconde pièce 6, comme représenté à la figure 2.

De préférence, le dispositif selon l'invention comprend également un moyen 14 de maintien en position fixe formant un mors fixe de maintien de la première pièce 2 selon une position fixe, disposé à une certaine distance de l'extrémité 2a à assembler de ladite première pièce 2. Cette distance est symbolisée par D à la figure 1. On peut comprendre aisément que de même l'extrémité 6a correspondante de la deuxième pièce 6 à assembler puisse être maintenue soit en position fixe par un mors fixe similaire au mors fixe 14, soit en position mobile par son maintien dans un mors mobile similaire au mors mobile 10 commandé en déplacement par un dispositif de commande de déplacement similaire au dispositif de commande 12 de la figure 1, ou différent de celui-ci.

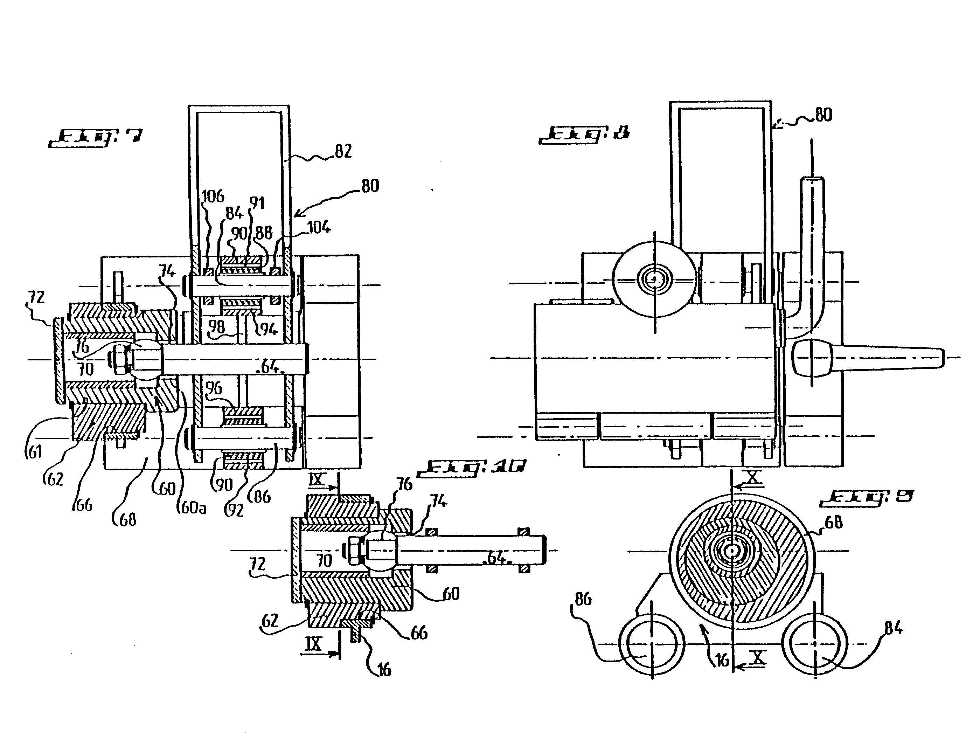

En référence encore à la figure 1, on observera que le mors mobile 10 du dispositif 12 comprend une partie fixe formant châssis 16 qui est solidaire d'une partie formant embase 18 sur laquelle est également montée la partie fixe formant châssis 15 du mors fixe 14. La partie formant châssis 16 et l'embase 16 sont plus particulièrement visibles en coupe aux figures 5 et 9.

Dans l'exemple représenté actuellement préféré, l'embase 18 est montée déplaçable sur des rails de guidage 20, 22, parallèles et latéralement espacés, Ainsi, l'embase 18 se décompose en pratique en deux éléments d'embase 19, 21, chaque élément d'embase 19, 21 étant composé de deux demi-coquilles 19a, 19b et 21a, 21b, respectivement, pouvant être bloquées contre les rails 20, 22, respectivement, à l'aide d'un dispositif de serrage habituel 24 que l'on voit à la figure 6.

En référence à la figure 2, on a représenté le dispositif d'avancement d'un manchon 30 d'assemblage des extrémités 2a et 6a respectivement des première pièce 2 et deuxième pièce 6. Ce dispositif d'avancement, représenté par le numéro de repère général 32, comprend, selon le mode de réalisation représenté, une tige filetée 34 et une vis formée par une noix filetée 36 comportent deux épaulements latéraux 38, 40, clairement visibles à la figure 3, que l'on vient insérer dans des encoches correspondantes 42, 44 réalisées dans des oreilles d'attelage 46, 48 montées solidaires du mors mobile 10. A l'extrémité avant 34a, la tige filetée 34 est prévue de manière à saillir bien au-delà de l'extrémité 2a de la pièce 2 à assembler pour venir dépasser même au-delà du manchon 30 disposé sur l'extrémité 6a correspondante de la deuxième pièce 6 à assembler. Cette première extrémité 34a de la tige filetée 34 est pourvue d'une fourchette 50 que l'on voit très bien à la figure 4. Cette fourchette définit une encoche 52 en forme de U inversé dont la dimension est adaptée au diamètre externe de la seconde pièce de manière à pouvoir coulisser librement relativement à cette seconde pièce tout en étant capable de faire avancer le manchon 30 lors de la rotation de la tige filetée 34. Naturellement, l'autre extrémité 34b de la tige filetée 34 est pourvue d'un moyen 54 de mise en rotation formé par exemple par un levier 56 mais ce moyen de mise en rotation peut être naturellement formé par un moyen de commande automatique.

En référence aux figures 3 et 5, on observera que le mors mobile 10, comme d'ailleurs le mors fixe 14, est formé par deux parties hémicylindriques 10a, 10b, l'une (10b) est montée pivotante relativement à l'autre (10a) grâce à un axe de pivotement 11 et comporte, à l'opposé de l'axe de pivotement 11, des oreilles pourvues d'un dispositif de verrouillage 54 tout à fait classique et qui n'est donc pas décrit ici.

En référence aux figures 5 à 10, on décrira maintenant plus précisément le dispositif de commande 12 de déplacement du mors mobile 10.

Ce dispositif de commande 12, selon l'exemple représenté, comprend un système à excentriques 60, 62, chaque excentrique est pourvu d'une manette de commande 120, 122.

D'autre part, le dispositif de commande 12 est monté sur le châssis 16 et commande un bras de commande proprement dit 64 de manière à l'orienter dans une direction quelconque.

Les excentriques 60, 62 et le bras de commande 64 sont clairement représentés aux figures 7, 9 et 10. On peut voir que le premier excentrique 60 est monté en rotation libre dans un logement 61 du second excentrique 62 ou excentrique externe. Le second excentrique 62 est lui-même monté en rotation libre dans un logement 66 prévu dans une pièce tubulaire 66 solidarisée du châssis 16 qui, comme on l'a vu précédemment, est lui-même solidaire de l'embase 18.

Le premier excentrique, ou excentrique interne, 60 comporte une cavité interne 70 obturée de manière amovible par un dispositif d'obturation 72. Ainsi, l'excentrique interne 60 présente en coupe axiale une forme générale en U à fond plat 60a disposé horizontalement avec la partie formant fond comportant un trou traversant 74 permettant le passage du bras de commande 64. Ce bras de commande est maintenu prisonnier dans la cavité 70 formant logement en ayant son extrémité disposée à l'intérieur de la cavité 70 pourvue d'une rotule 76 de dimension plus grande que la dimension de l'orifice traversant 74. Le bras de commande 64 est quant à lui solidaire d'un berceau 80 clairement visible à la figure 7 et en partie aux figures 5 et 6.

Ce berceau 80 est dans l'exemple représenté formé par un élément profilé 82 conformé en U, pourvu de deux axes 84, 86 de liaison disposés parallèlement, latéralement décalés, agencés de part et d'autre du bras de commande 64 comme cela est clairement visible à la figure 7. Ces axes de liaison sont montés à l'intérieur de coussinets déformables respectivement 88, 90 eux-mêmes montés dans des logements 91, 92 définis par des pièces cylindriques 94, 96 solidaires d'une plaque commune 98 formant partie intégrante du châssis 16.

Le berceau 80 est ainsi monté déplaçable par rapport au châssis 16. Un cadre support 100, que l'on voit bien à la figure 5, solidaire du mors mobile 10 vient prendre appui sur le berceau 80.

De préférence, comme représenté, le cadre support 100 est monté latéralement déplaçable relativement au berceau 80 par un système de dégagement 102 de manière à dégager latéralement l'ensemble formé du cadre support 100 et du mors mobile 10 en dégageant ainsi la première pièce 2, par exemple un tube, hors de l'axe général du dispositif complet en permettant ainsi de faciliter les opérations préalables à l'assemblage comme les opérations de coupe en longueur et autres opérations éventuelles préliminaires à l'assemblage comme le chanfreinage, grattage, nettoyage, etc.

Ce système de dégagement 102 comprend selon l'exemple représenté deux bielles coudées 104, 106 latéralement espacés dont une extrémité de chaque bielle 104, 106 est montée en rotation libre relativement au berceau 80, de préférence autour d'un axe de liaison, par exemple l'axe de liaison 84 (voir figures 6 et 7), tandis que l'autre extrémité est articulée en rotation libre relativement au cadre support 100 à l'aide d'un axe de rotation 106.

D'autre part, le système de dégagement 102 est pourvu d'un dispositif de verrouillage 110 du cadre support avec le berceau 80 lorsque le cadre support 100 prend appui sur le berceau 80. Ce dispositif de verrouillage 110 comprend par exemple une tige 112 se terminant par une poignée de verrouillage 114 pourvue de flasques latéraux 116, 118 de solidarisation du cadre support 100 avec le berceau 80 comme cela est clairement visible à la figure 10, représentant la position verrouillée du dispositif de verrouillage 110.

En ce oui concerne les excentriques 60, 62, naturellement, les centres des excentriques 60, 62 sont non seulement décalés entre eux mais sont également décalés par rapport à l'axe du bras de commande 64.

Nous avons vu précédemment que l'axe du bras de commande 64 est inclus dans un plan de symétrie du mors mobile 10 passant par son centre géométrique qui coïncide avec le centre géométrique de la première pièce 2.

Le fonctionnement de ce dispositif cet particulièrement simple et résulte clairement de la description détaillée précédente.

Ainsi, on se bornera à mentionner ici que la première pièce à assembler 2, par exemple constituée par un tube, est introduite tout d'abord dans le mors fixe 14 et ensuite dans le mors mobile 10 et on serre les mors pour maintenir fermement la première pièce 2.

Chaque excentrique 60, 62 étant pourvu d'une manette de commande 120, 122, clairement visible à la figure 1, en fonction de la déformation de la pièce, on tourne chaque excentrique 60, 62 à l'aide de chaque manette 120, 122 associée de manière à redresser l'extrémité 2a et à l'aligner parfaitement avec l'extrémité 6a de la deuxième pièce 6 avec laquelle la première pièce 2 doit être assemblée, c'est-à-dire dans la position représentée à la figure 2.

La rotation relative des excentriques 60, 62 permet de réaliser un redressement dans de larges limites et on a symbolisé en trait fantôme sur la partie droite de la figure 1 le cercle C maximal qui sera décrit par le bord externe du tube dans ces positions extrêmes.

Cette orientation est rendue possible par la structure du bras de commande 64 commandant en déplacement le berceau 80 monté en déplacement relativement au châssis 16 et sur lequel vient reposer le cadre support 100 du mors mobile 10.

Une fois que la position redressée, alignée de la figure 2 est obtenue, on actionne alors le dispositif d'avancement 32 de manière à amener le manchon 30, par coulissement, en chevauchement des extrémités respectivement 2a et 6a à rassembler. Lorsqu'on réalise un simple manchonnage, l'avancement de ce manchon réalise l'assemblage. Ce manchon peut ensuite être soudé aux extrémités 2a et 6a par tout moyen approprié par exemple par collage, etc. Le manchon 30 peut aussi être un manchon de thermosoudage contenant un fil de thermosoudage incorporé de manière à réaliser un soudage bout à bout des extrémités. Dans ce cas, on peut naturellement amener l'extrémité 2a en butée contre l'extrémité 6a.

On obtient ainsi tous les avantages précédemment décrits, la conception du dispositif étant plus simple. Il est aussi manipuler et aboutit à une précision parfaite d'assemblage procurant une grande nécessité d'assemblage avec une meilleure cadence.

Naturellement, de nombreuses variantes ou modifications sont possibles.

Par exemple, dans le cas de l'assemblage de pièce de grande dimension ou dans le cas d'un rapport de diamètre relativement à l'épaisseur, on peut remplacer le dispositif de commande 12 à excentrique par un système de commande d'orientation du mors mobile 10 approprié. Un tel système peut être réalisé à partir d'une combinaison de vérins de tout type, hydraulique, pneumatique, électro-pneumatique, etc. Le dispositif de commande peut également être de conception mécanique par un système d'engrenage, de vie et écrou ou de rotule désaxée sans sortir pour autant du cadre de l'invention.

De même, le dispositif d'avancement 32 du manchon 30 peut être réalisé par des moyens quelconques, également par exemple par un système à vérin, ou un système mécanique par treuil ou levier sans sortir également du cadre de l'invention.

**Revendications**

1. Dispositif de redressement et d'alignement de l'extrémité (2a) d'une première pièce allongée en matière plastique (2) avec l'extrémité (6a) d'une deuxième pièce (6) en vue de l'assemblage bout à bout de ces deux pièces et du type comprenant un mors mobile (10) de maintien de l'extrémité (2a) de la première pièce ainsi qu'un dispositif (12) de commande de ce mors mobile pour redresser et aligner l'extrémité (2a) de la première pièce avec l'extrémité correspondante (6a) de la deuxième pièce, caractérisé en ce que le dispositif (12) de commande du mors mobile comprend un système à excentriques (60, 64) permettant le déplacement dudit mors et donc de l'extrémité (2a) de la pièce (2) suivant une direction quelconque, tandis qu'un mors fixe (14) maintient en position fixe la pièce (2) à une certaine distance (D) de ladite extrémité (2a).

2. Dispositif selon la revendication 1, caractérisé en ce qu'il comprend un châssis (16) sur lequel est monté le dispositif de commande précité (12) actionnant un bras de commande (64) proprement dit dans la direction quelconque précitée, ledit bras de commande (64) étant solidaire d'un berceau (80) monté déplaçable par rapport au châssis (16), sur lequel berceau (80) vient prendre appui un cadre support (100) solidaire du mors mobile (10).

3. Dispositif selon la revendication 2, caractérisé en ce que le dispositif (12) de commande précité comprend un système à deux excentriques (60, 62), et le bras de commande (64) comprend une articulation à rotule maintenue prisonnière dans un logement (70) de l'un des excentriques (60, 62).

4. Dispositif selon la revendication 3, caractérisé en ce qu'un premier excentrique (60) est monté en rotation libre dans un logement (61) réalisé dans la masse du deuxième excentrique (62), les axes des excentriques étant parallèles et non coïncidants.

5. Dispositif selon l'une des revendications 2 à 4, caractérisé en ce que l'axe du bras de commande (64) est également non coïncidant avec les centres ou axes des excentriques (60, 62).

6. Dispositif selon la revendication 5, caractérisé en ce que l'axe du bras de commande (64) est inclus dans un plan de symétrie de la première pièce (2) passant par le centre géométrique (3, 4) de ladite première pièce.

7. Dispositif selon l'une des revendications 2 à 4, caractérisé en ce qu'il comprend un système de dégagement (102) du cadre support (100) relativement au berceau (80) de manière à déplacer le cadre support (100) latéralement relativement au berceau (80) hors de l'axe du dispositif.

8. Dispositif selon l'une des revendications 2 à 7, caractérisé en ce qu'il comprend un dispositif de verrouillage (110) du cadre support (100) avec le berceau (80) pour les lier en déplacement.

9. Dispositif selon l'une des revendications 2 à 8, caractérisé en ce que le châssis (16) est lui-même monté déplaçable sur des rails, ainsi que le mors fixe (14) précité, le châssis (16) et le mors (14) étant montés sur une pièce unique formant embase (18) de manière à les lier en déplacement, cette pièce formant embase (18) étant alors montée déplaçable sur les rails (20, 22).

10. Dispositif selon l'une des revendications 1 à 9, caractérisé en ce que le mors mobile (10) est surmonté d'un dispositif (32) d'avancement d'un manchon (30) d'assemblage de ladite première pièce (2) par avancement du manchon (30) en direction de l'extrémité à assembler (2a) de la première pièce (2) maintenue dans le mors mobile (10).

## Claims

1. Apparatus for straightening and aligning the end (2a) of a first elongated plastic article (2) to the end (6a) of a second article (6b) to effect a butt joint of both articles and of the type comprising a movable clamping jaw (10) for maintaining the end (2a) of the first article as well as a device (12) for controlling this movable clamping jaw for straightening and aligning the end (2a) of the first article to the corresponding end (6a) of the second article, characterized in that the device (12) for controlling the movable clamping jaw comprises a system with eccentrics (60, 64) permitting the displacement of the said clamping jaw and thus of the end (2a) of article (2) along any direction, whereas a stationary clamping jaw (14) maintains in stationary position the article (2) at a certain distance (D) from the said end (2a).

2. Apparatus according to claim 1, characterized in that it comprises a framing (16) on which is mounted the aforesaid control device (12) actuating a control arm (64) proper in any aforesaid direction, the said control arm (64) being solid with a cradle (80) mounted in movable relationship to the framing (16), upon which cradle (80) rests a support frame (100) solid with the movable clamping jaw (10).

3. Apparatus according to claim 2, characterized in that the aforesaid control device (12) comprises a system with two eccentrics (60, 62), and the control arm (64) comprises a ball-and-socket joint maintained set inside a seat (70) of one of the eccentrics (60, 62).

4. Apparatus according to claim 3, characterized in that a first eccentric (60) is mounted in a free rotary manner in a seat (61) made in the mass of the second eccentric (62), the axes of the eccentrics being parallel and not coincident.

5. Apparatus according to one of claims 2 to 4, characterized in that the axis of the control arm (64) also is not coincident with the centres or axes of the eccentrics (60, 62).

6. Apparatus according to claim 5, characterized in that the axis of the control arm (64) is included in a plane of symetry of the first article (2) including the geometrical centre (3, 4) of the said first article.

7. Apparatus according to one of claims 2 to 4, characterized in that it comprises a system (102) for withdrawing the support frame (100) with respect to the cradle (80) so as to displace the support frame (100) laterally with respect to the cradle (80) out of the axis of the apparatus.

8. Apparatus according to one of claims 2 to 7, characterized in that it comprises a device (110) for locking the support frame (100) with the cradle (80) to bind them in displacement.

9. Apparatus according to one of claims 2 to 8, characterized in that the framing (16) itself is mounted in a movable manner on rails, as well as the aforesaid stationary clamping jaw (14), the framing (16) and the clamping jaw (14) being mounted on a unique base-forming part (18) in order to bind them in displacement, this base-forming part (18) being then mounted in a movable manner on rails (20, 22).

10. Apparatus according to one of claims 1 to 9, characterized in that the movable clamping jaw (10) is surmounted by a device (32) for feeding a sleeve (30) for assembling the said first article (2) by feeding the sleeve (30) in the direction of the end (2a) to be assembled of the first article (2) maintained in the movable clamping jaw (10).

**Patentansprüche**

1. Vorrichtung zum Ausrichten und Anpassen des Endes (2a) eines ersten länglichen Teils (2) aus Kunststoff mit dem Ende (6a) eines zweiten Teils (6) zur End-zu-End-Verbindung dieser beiden Teile und der Gattung, die eine bewegliche Spannbacke (10) zum Festhalten des Endes (2a) des ersten Teils und eine Vorrichtung (12) zur Betätigung dieser beweglichen Spannbacke zum Ausrichten und Anpassen des Endes (2a) des ersten Teils mit dem entsprechenden Ende (6a) des zweiten Teils aufweist, dadurch gekennzeichnet, daß die Vorrichtung (12) zur Betätigung der beweglichen Spannbacke ein System mit Exzentern (60, 64) aufweist, das die Verstellung der besagten Spannbacke und folglich des Endes (2a) des Teiles (2) entlang einer beliebigen Richtung ermöglicht, während eine stationäre Spannbacke (14) das Teil (2) in einem gewissen Abstand (D) vom besagten Ende (2a) in einer festen Stellung festhält.

2. Vorrichtung nach Anspruch 1, dadurch gekennzeichnet, daß sie ein Gestell (16) aufweist, auf dem die besagte Betätigungsvorrichtung (12) montiert ist, die einen eigentlichen Betätigungsarm (64) in der besagten beliebigen Richtung batätigt, wobei der besagte Betätigungsarm (64) mit einem in Bezug auf das Gestell verstellbaren Sattel (80) einstückig ist, auf welchen Sattel (80) ein mit der beweglichen Spannbacke (10) einstükkiger Tragrahmen (100) sich stützt.

3. Vorrichtung nach Anspruch 2, dadurch gekennzeichnet, daß die besagte Betätigungsvorrichtung (12) ein System mit zwei Exzentern (60, 62) aufweist, und daß der Betätigungsarm (64) ein Kugelgelenk aufweist, das in einer Aufnahme (70) eines der Exzenter (60, 62) festgehalten wird.

4. Vorrichtung nach Anspruch 3, dadurch gakennzeichnet, daß ein erster Exzenter (60) in einer in der Masse des zweiten Exzenters (62) durchgeführten Aufnahme (61) frei rotierbar montiert ist, wobei die Achsen der Exzanter parallel und nicht zusammanfallend sind.

5. Vorrichtung nach einem der Ansprüche 2 bis 4, dadurch gekennzeichnet, daß auch die Achse des Betätigungsarms (64) mit den Mittelpunkten oder Achsen der Exzenter (60, 62) nicht zusammenfallend ist.

6. Vorrichtung nach Anspruch 5, dadurch gekennzeichnet, daß die Achse des Betätigungsarms (64) in einer den geometrischen Mittelpunkt (3, 4) des ersten Teils einschließenden Symetrieebene des besagten ersten Teils (2) eingeschlossen ist.

7. Vorrichtung nach einem der Ansprüche 2 bis 4, dadurch gekennzeichnet, daß sie ein System (102) zum Abtrennen des Tragrahmens (100) vom Sattel (80) aufweist, damit der Tragrahmen (100) in Bezug auf den Sattel (80) seitlich aus der Achse der Vorrichtung verstellt wird.

8. Vorrichtung nach einem der Ansprüche 2 bis 7, dadurch gekennzeichnet, daß sie eine Vorrichtung (110) zum Verriegeln des Tragrahmens (100) mit dem Sattel (80) aufweist, um sie beim Verstellen zu verbinden.

9. Vorrichtung nach einem der Ansprüche 2 bis 8, dadurch gekennzeichnet, daß das Gestell (16) und auch die besagte stationäre Spannbacke (14) auf Schienen verstellbar montiert sind, wobei das Gestell (16) und die Spannbacke (14) auf einem einzigen, eine Sitzfläche bildenden Teil (18) montiert sind, damit sie beim Verstellen verbunden sind, wobei dieses eine Sitzfläche bildende Teil (18) dann auf den Schienen (20, 22) verstellbar montiert ist.

10. Vorrichtung nach einem der Ansprüche 1 bis 9, dadurch gekennzeichnet, daß eine Vorrichtung (32) zur Vorwärtsbewegung einer Hülse (30) zur Verbindung des besagten ersten Teils (2) durch die Vorwärtsbewegung der Hülse (30) in Richtung auf das zu verbindende Ende (2a) des in der beweglichen Spannbacke (10) festgehaltenen ersten Teils (2) über der beweglichen Spannbacke (10) angeordnet ist.

FIG. 4

FIG. 2

FIG. 3

FIG. 1

_Fig.5_

_Fig.6_

EP 0 220 095 B1